# EUROPEAN PATENT SPECIFICATION

(11) **EP 3 615 823 B1**
(45) Date of publication and mention of the grant of the patent: **02.06.2021**
(21) Application number: 18721314.5
(22) Date of filing: 23.04.2018
(51) Int. Cl.: F16D 3/38

(54) **CARDAN JOINT**
KARDANGELENK
JOINT DE CARDAN

(30) Priority: 25.04.2017 GB 201706520
(43) Date of publication of application: 04.03.2020
(73) Proprietor: Kovac, Dr Igor, 1235 Radomlje (SI); Jozef Stefan Institute, 1000 Ljubljana (SI)
(72) Inventor: KOVAC, Dr Igor, 1000 Ljubljana (SI)
(74) Representative: Mewburn Ellis LLP
(86) International application number: PCT/EP2018/060387
(87) International publication number: WO 2018/197439

(56) References cited:
- WO-A2-01/94803
- US-A- 1 424 299
- US-A- 1 583 184
- US-A1- 2002 061 782

## Description

### Field of the Invention

The present invention relates to a cardan joint with an adjustable backlash mechanism.

### Background

Cardan joints (also referred to as universal joints) are commonly used in mechanical systems in order to transfer rotary motion from one part to another when said parts are not necessarily parallel.

Generally, a cardan joint comprises a pair of yokes connected by a linkage (also referred to as a spider or cross-shaft). The connection between any given yoke and the linkage may be subject to backlash. Backlash is generally understood to mean the maximum distance or angle through which any part of a mechanical system may be moved in one direction without applying appreciable force or motion to the next part in mechanical sequence. In the context of universal joints, backlash can refer to unnecessary, or unwanted, movement of either the yoke or linkage which does not aid in the transfer of rotational force.

US Patent Number 5,062,730 describes a cardan joint having two yokes coupled by a coupling link. The joint as disclosed in this patent is manufactured with a high degree of accuracy in an attempt to mitigate the effects of backlash. However, the degree to which backlash is present is highly dependent on the manufacturing quality, and moreover any backlash introduced by use of the joint cannot be corrected.

US Patent Number 6,926,611 describes a cardan joint with elastomeric bearings. The bearings are preloaded in compression, and comprise laminated segments with reduced resistance to shear deformation or rubber cords providing reduced torsional stiffness. However this joint has a large number of components, which renders it complex and may increase the unit price substantially. Furthermore any backlash within the joint cannot be corrected after manufacture or assembly

Documents US 1 583 184 A, US 1 424 299 A and US 2002/061782 A1 provide further examples of cardan joints.

Multi-axis positioners are often used in multi-axis machining and other related roles. A multi-axis positioner should accurately move a workpiece of a sample, and many examples do so through the use of cardan joints connected to extensible rods. The movement of the positioner needs to be highly accurate (in some examples to within microns) and therefore any backlash within the cardan joints can negatively affect the overall accuracy of the positioner. Conventional cardan joints cannot be tightened or have their stiffness and/or backlash adjusted.

Accordingly, there is a need for a cardan joint overcoming the problems listed above.

### Summary

Accordingly, in a first aspect, the invention provides a cardan joint according to claim 1.

Advantageously, the degree of backlash may be preloaded for the joint and moreover can be adjusted without requiring dismantling of the joint and so can be performd after the joint has been incorporated in a larger device (such as a multi-axis positioner). The ability to adjust the backlash can allow the amount of backlash to be maintained at an effectively constant level over the life of the joint, even if there is wear on the components of the joint which would normally lead to increased backlash.

In a second aspect, the invention provides a multi-axis positioner including a cardan joint as set out according to the first aspect. The multi-axis positioner may include several such cardan joints, which may be interconnected, for example by extensible rods.

Conveniently, the rigidity of the joint, which is dependent in part on the degree of backlash, as used in the multi-axis positioner may be adjusted.

As the amount of backlash in the cardan joint(s) in the positioner can be controlled or adjusted, more accurate operation of the positioner may be possible. For example, the amount of backlash in the cardan joint(s) may be adjusted to a predetermined level and account taken of this in the control of the positioner. Alternatively or additionally the backlash may be adjusted to a level where its contribution to the overall error in the position of the positioner is below a desired level.

Optional features of the invention will now be set out. These are applicable singly or in any combination with any aspect of the invention.

The first yoke or the second yoke may be configured to rotate about an axis of rotation of the linkage, and the backlash adjusting mechanism may be configured to reduce or increase the amount of backlash in an axis transversal to the axis of rotation.

Advantageously, this can reduce the slackness in the joint (i.e. increase the tightness) by decreasing any gaps between the first or the second yoke and the linkage.

The backlash adjusting mechanism may be configured to reduce or increase an amount of backlash between the linkage and the first yoke, and the joint may further include: a second backlash adjusting mechanism, the second backlash adjusting mechanism configured to reduce or increase a degree of backlash between the linkage and the second yoke. Conveniently, this can further increase the tightness of the joint and/or provide for control of the backlash in multiple directions.

According to the invention, at least one backlash adjusting mechanism is provided as one or more slots within the linkage, wherein a width of the or each slot is adjustable.

Advantageously, the slots may be easily machined within the linkage and provide an accurate adjustment mechanism for backlash.

The shaft may be a first shaft, the first shaft being fixed to the first yoke or the second yoke and rotatable relative to the linkage. The first shaft may be disposed within a housing of the linkage, wherein adjusting the width of the slot adjusts a dimension of the housing. The first shaft may be threaded, and may threadedly engage with the linkage to prevent axial displacement of the first shaft relative to the linkage.

A further backlash adjusting mechanism may be provided as one or more slot(s) within the first yoke and/or the second yoke, wherein a width of the slot(s) are adjustable. The joint may include a second shaft, the second shaft being fixed to the linkage and rotatable relative to the first yoke or the second yoke. The second shaft may be disposed within a housing of the first yoke or the second yoke, and adjusting the width of the slot may adjust a dimension of the housing. The second shaft may be threaded, and may threadedly engage with the first yoke or the second yoke to prevent axial displacement.

Advantageously, the threaded engagement can serve to further tighten the joint and improve accuracy.

The or each backlash mechanism may comprise one or more adjustment screws disposed within a threaded bore of either the linkage or the first yoke or the second yoke.

The use of adjustment screws may provide a simple way of controlling the backlash. Conveniently, the adjustment screws can be operated with the joint assembled.

The first or second shaft may be fixed to the yoke(s) or the linkage by nuts or by gluing or welding. By fixing the shafts in this way, backlash within the joint in other directions can also be reduced or eliminated.

Preferably the shaft(s) and/or housings are formed of a material with a low-coefficient of friction.

The first yoke may rotate relative to the linkage around a first axis, the second yoke may rotate relative to the linkage around a second axis; and the first axis and the second axis may intersect. The linkage may comprise a cuboidal shaded housing, the housing having four apertures, each on a respective face of the housing; wherein the four shafts are respectively disposed in each of the four apertures, and each shaft is fixed to the housing.

Advantageously, such a joint may have reduced dimensions as the linkage can be made smaller.

The first yoke may rotate relative to the linkage around a first axis, the second yoke may rotate relative to the linkage around a second axis; and the first axis and second axis may not intersect. The linkage may comprise a rectangular shaped housing, the housing have two bores, each on a respective face of the housing; wherein two shafts are respectively disposed within the bores of the linkage, and each shaft is fixed to either the first yoke or second yoke.

Advantageously, by spacing the first and second axes of rotation, the degree by which the yokes may rotate can be increased.

### Brief Description of the Drawings

Embodiments of the invention will now be described by way of example with reference to the accompanying drawings in which:
Figure 1 shows an exploded perspective view of a cardan joint according to an embodiment of the present invention;
Figure 2 shows an assembled perspective view of the cardan joint of Figure 1 in a first position;
Figure 3 shows an assembled perspective view of the cardan joint of Figure 1 in a second position;
Figure 4 shows an exploded perspective view of a cardan joint comprising backlash adjusting mechanisms provided as slots in the yokes;
Figure 5 shows an assembled perspective view of the cardan joint of Figure 4.

### Detailed Description and Further Optional Features

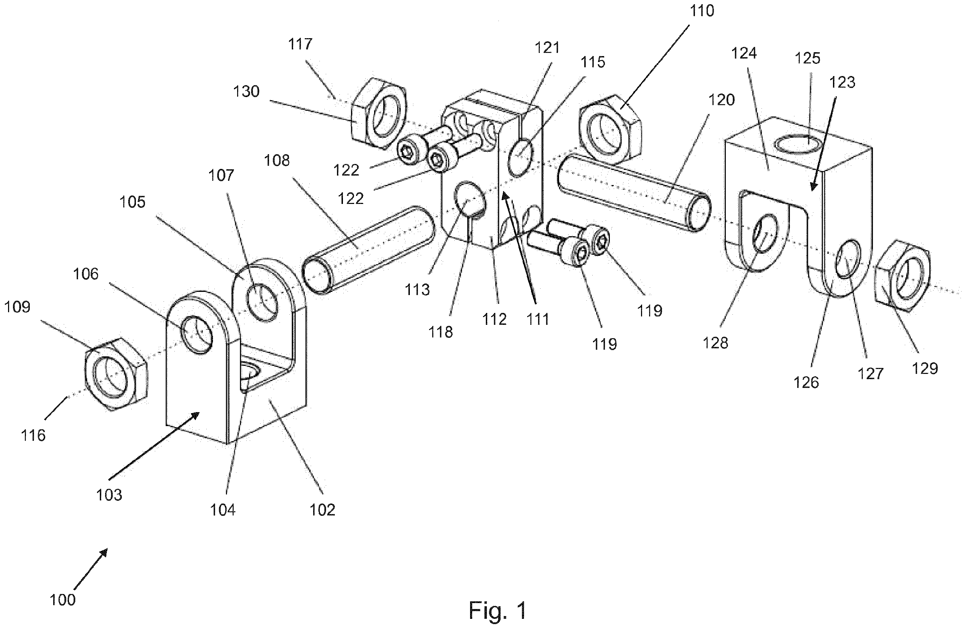

Figure 1 shows an exploded view (in perspective) of a cardan joint 100 with improved backlash control according to an embodiment of the present invention. The joint comprises a first coupling unit 103, a second coupling unit 123 and a linkage 111 that connects the first and second coupling units.

The first coupling unit 103 has a base portion 102 and yoke portion (or yoke) 105. The base portion 102 is suitable for connecting to a rotary shaft or other mechanical linkage via an aperture 104. The yoke 105 includes first and second apertures 106 and 107, through which a shaft 108 passes. The shaft may be fixed in place by, for example, nut 109 and nut 110. Alternatively the shaft may be glued or welded to the yoke. As a further alternative, apertures 106 and 107 may be threaded and the shaft may include corresponding threaded portions; in such examples, the shaft may be threadedly engaged with the apertures thereby fixing it in place. Therefore the shaft 108 is not rotatable relative to the yoke 105.

A mid-portion of the shaft 108 is disposed within an aperture 113 of a linkage 111. The aperture 113 extends through a first face 112 of the linkage 111. Connected to the aperture 113 is a slot 118, the width of which may be controlled by adjustment screws 119, the adjustment screws engaging the linkage either side of the slot. Therefore the degree to which there is backlash between the shaft 108 and the linkage 111 can be controlled by the adjustment screws 119 which control a dimension (e.g. a width) of slot 118, which in turn adjusts a dimension (e.g. a radius) of aperture 113. Linkage 111 is rotatable around an axis 116 which passes through the yoke 105 and its apertures 106 and 107. Backlash may exist in the joint along an axis which is transversal to the axis of rotation 116. For example, the gap between the shaft 108 and the aperture 113 may vary along the length of the shaft. Therefore the shaft 108 might be rotatable in an axis transversal to the axis of rotation 116, which can be described as backlash in the joint. The linkage 111 is preferably formed of a material with a low-coefficient of friction, as are the shafts 108 and 120.

The second coupling unit 123 is substantially identical to the first, and also comprises a base portion 124 and yoke portion (or yoke) 126. The base portion 124 is suitable for connecting to a rotary shaft or other mechanical linkage via an aperture 125. The yoke 126 includes first and second apertures 128 and 127, through which a second shaft 120 passes. The second shaft may be fixed in place by, for example, nuts 129 and 130. A mid-point of the shaft 120 is disposed within a second aperture 115 of the linkage 111. The aperture 115 being disposed on a different face to aperture 113. Aperture 115 also includes adjustment slot 121, which is controlled by adjustment screws 122. Therefore the degree of backlash between aperture 115 and the shaft 120 may be adjusted, by adjusting the width slot 121 through adjustment screws 122. The linkage 111 is rotatable relative to the yoke 126 about an axis 117.

Optional features of the first coupling unit, such as the apertures and shaft having threaded portions, are equally applicable to the second coupling unit.

It can be seen that axis of rotation 117 and axis of rotation 116 are offset relative to one another, i.e. they do not intersect. In a variant example of the joint shown in Figure 1, the axes of rotation do intersect. The dimensions of the linkage 111 and yokes 105 and 123 are chosen such that they may rotate by more than ±50°.

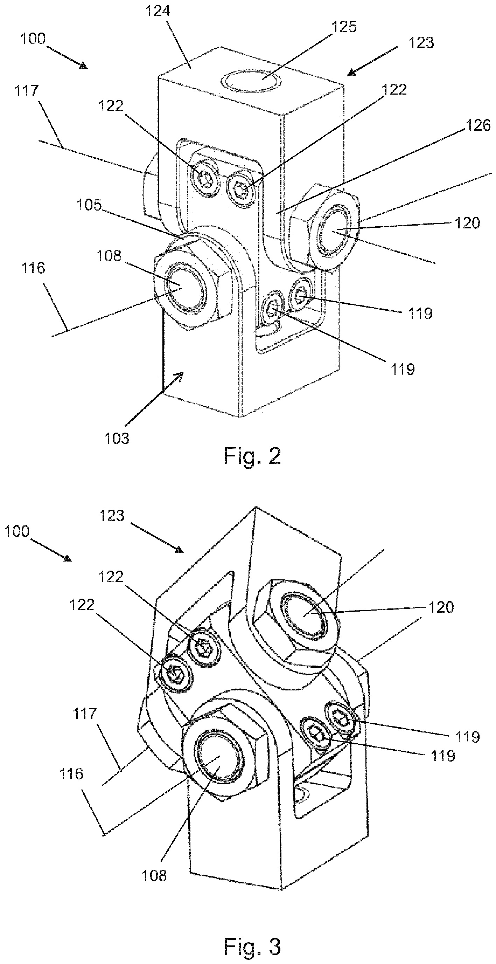

Figure 2 shows the joint 100 in an assembled form. As is clearly shown, the first and second shafts 120 and 108 are fixed within respective yokes 126 and 105, by nuts. This fixing can also prevent axial displacement of the shaft. The linkage 111 is therefore rotatable around axes 116 and 117 and the degree of backlash between the shafts 120 and 108 and the linkage 111 is adjustable via screws 119 and 122. Figure 3 shows an example where the linkage 111 has been rotated around axis 116 such that linkage 111, second coupling unit 123, and axis of rotation 117 has been rotated relative to the arrangement shown in Figure 2.

In this example, the adjustment mechanism (i.e. slots 118 and 121) are installed within the linkage 111 present between the two yokes.

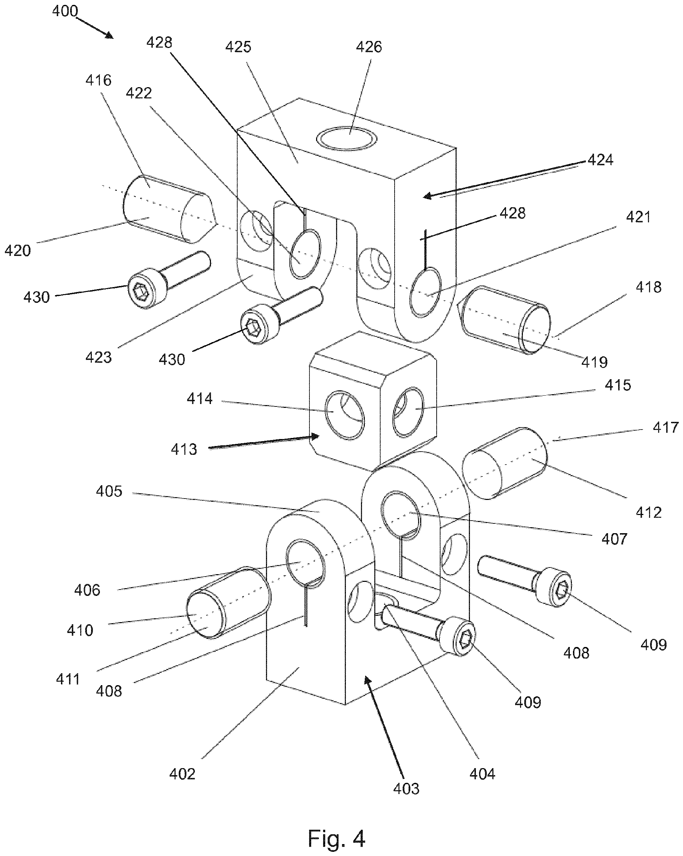

Figure 4 shows an exploded (in perspective) view of a cardan joint 400 with improved backlash control. In this example, the adjustment mechanisms are mounted within the yokes of the coupling units rather than in the linkage. In detail, the joint 400 comprises a first coupling unit 403 which comprises a base 402 and yoke 405. The base 402 includes an aperture 404 suitable for attachment to a rotating shaft or other mechanical linkage. The yoke 405 includes first and second apertures 406 and 407. In this respect, the coupling unit 403 is identical to the coupling units shown in Figures 1 - 3. However, the apertures of coupling unit 403 each include respective slots 408. A width of the slots may be adjusted by adjustment screws 409. A pair of shafts 410 and 412 are disposed within respective apertures 406 and 407 of the yoke 405. Therefore, by adjustment of the screws 409, the degree of backlash present between the apertures of the yoke and the shafts can be adjusted.

The length of the shafts is such that the shafts extend beyond respective apertures 406 and 407 into corresponding apertures 414 of a linkage 413. The apertures within the linkage may contain a thread, and the shafts may have a corresponding thread such that they threadedly engage to fix the shafts in place relative to the linkage 413. Therefore the shafts may not rotate relative to the linkage 413, but instead rotate relative to the yoke 405. Similarly, a second coupling unit 424 comprises a base 425 and yoke 423. The second coupling unit 424 is substantially identical to the first coupling unit 403. The base 425 includes an aperture 426 suitable for attachment to a rotating shaft or other mechanical linkage. The yoke 423 includes first and second apertures 422 and 421. The apertures of coupling unit 424 include respective slots 428. A width of the slots 428 may be adjusted by adjustment screws 430. A pair of shafts 419 and 420 are disposed within respective apertures 422 and 421 of the yoke 423. Therefore, by adjustment of the screws 430, the degree of backlash present between the apertures of the yoke and the shafts can be adjusted.

The length of the shafts is such that the shafts extend beyond respective apertures 422 and 421 into corresponding apertures 415 of the linkage 413. The apertures of the linkage may contain a thread, and the shafts may have a corresponding thread such that they threadedly engage to fix the shafts in place relative to the linkage 413. Therefore the shafts may not rotate relative to the linkage 413, but instead rotate relative to the yoke 423.

In contrast to the example shown in Figures 1 - 3, the adjustment mechanism in the example 400 is disposed within respective yokes 405 and 423.

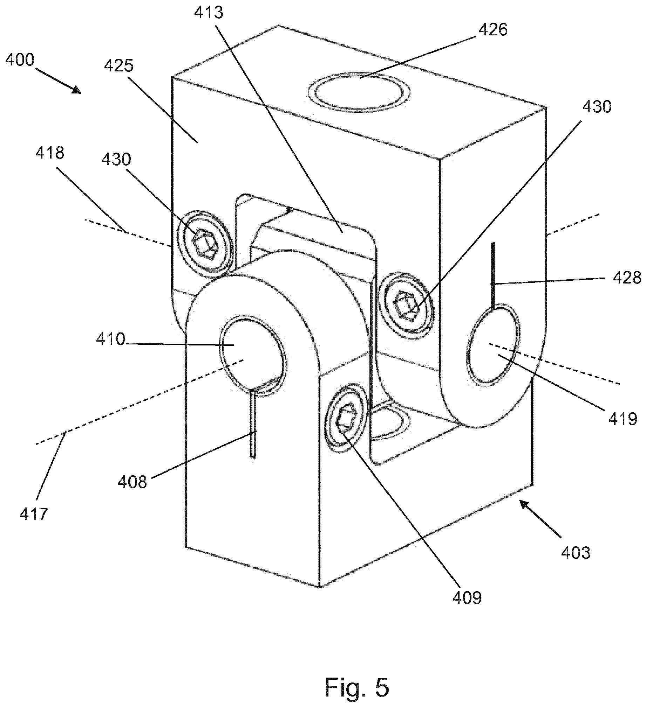

This is clearly shown in Figure 5. It should also be noted that, in the example shown in Figure 5, the first axis of rotation 417 and second axis of rotation 418 intersect one another within the linkage 413.

The shafts shown in the Figures are treated by the application of, for example, a helix tread or similar to thereby increase the surface area and as a result increase the stiffness and static load of the joint. However, untreated shafts may also be used. The slots as discussed above may include an elastic element disposed therein, such that theslots are biased to a rest position.

### List of features

- 100, 400: Cardan joint
- 102,402,124,424: Base
- 103, 403, 123, 425: Coupling unit
- 104, 404, 125, 426: Aperture within base
- 105,405,126,423: Yoke
- 106, 107, 406, 407, 127, 128, 421, 422: Aperture within yoke
- 108,410,412,120,419, 420: Shaft
- 109, 110, 129, 130: Nut for fixing shaft to yoke
- 111,413: Linkage
- 112: Face of linkage
- 113, 115, 414, 415: Aperture in linkage
- 116, 117, 417, 418: Axis of rotation
- 118, 121,408,428: Slot
- 119, 122, 409, 430: Adjustment screws

## Claims

1. A cardan joint (100), comprising:
a first yoke (105); and
a second yoke (126);
wherein the first yoke (105) and the second yoke (126) are connected via a linkage (111);
the cardan joint (100) further comprising:
a backlash adjusting mechanism, the backlash adjusting mechanism configured to reduce or increase an amount of backlash between the linkage (111) and either the first yoke (105) or the second yoke (126); and
a shaft (108, 120), either:
fixed to one of the yokes (105, 126) and threadedly engaged to the linkage (111); or
fixed to the linkage (111) and threadedly engaged to one of the yokes (105, 126);
so as to prevent axial displacement therebetween
**characterised in that** the or each backlash adjusting mechanism is provided as one or more slots (118, 121) within the linkage (111), wherein a width of the or each slot (118, 121) is adjustable.

2. The cardan joint (100) of claim 1, wherein the first yoke (105) or second yoke (126) is configured to rotate about an axis of rotation of the linkage (111), and wherein the backlash adjusting mechanism is configured to reduce or increase the amount of backlash in an axis transversal to the axis of rotation.

3. The cardan joint (100) of claim 1 or claim 2,
wherein the backlash adjusting mechanism is configured to reduce or increase an amount of backlash between the linkage (111) and the first yoke (105), and
the joint (100) further includes:
a second backlash adjusting mechanism, the second backlash adjusting mechanism configured to reduce or increase a degree of backlash between the linkage (111) and the second yoke (126).

4. The cardan joint (100) of claim 1, wherein the shaft (108, 120) is a first shaft (108), which is fixed to the first yoke (105) or the second yoke (126) and rotatable relative to the linkage (111);
optionally wherein the first shaft (108) is disposed within a housing of the linkage (111), and wherein adjusting the width of the slot (118) adjusts a dimension of the housing.

5. The cardan joint (100) of claim 4 wherein the first shaft (108) is fixed to the first yoke (105) or the second yoke (126) by nuts or by gluing or welding.

6. The cardan joint (100) of any preceding claim, wherein a further backlash adjusting mechanism is provided as one or more slots within the first yoke (105) and/or the second yoke (126), wherein a width of the or each slot is adjustable.

7. The cardan joint (100) of claim 6, wherein the shaft is second shaft being fixed to the linkage (111) and rotatable relative to the first yoke (105) or the second yoke (126);
optionally wherein the second shaft is disposed within a housing of the first yoke (105) or the second yoke (126), and wherein adjusting the width of the or each slot adjusts a dimension of the housing;
and optionally wherein the second shaft is fixed to the linkage (111) by gluing or welding.

8. The cardan joint (100) of any preceding claim, wherein the joint (100) includes a first shaft (108) and a second shaft (120),
the first shaft (108) being:
fixed to the first yoke (105) and threadedly engaged to the linkage (111); or
fixed to the linkage (111) and threadedly engaged to the first yoke (105);
so as to prevent axial displacement therebetween; and
the second shaft (120) being:
fixed to the second yoke (126) and threadedly engaged to the linkage (111); or
fixed to the linkage (111) and threadedly engaged to the second yoke (126);
so as to prevent axial displacement therebetween.

9. The cardan joint (100) of any preceding claim wherein the shaft(s) (108, 120) and/or housings are formed of a material with a low-coefficient of friction.

10. The cardan joint (100) of any preceding claim, wherein the or each backlash adjusting mechanism comprises one or more adjustment screws (119, 122) disposed within a threaded bore.

11. The cardan joint (100) of any preceding claim, wherein
the first yoke (105) rotates relative to the linkage (111) around a first axis, the second yoke (126) rotates relative to the linkage (111) around a second axis; and
the first axis and second axis intersect.

12. The cardan joint (100) of claim 11, wherein the linkage (111) comprises:
a cuboidal shaped housing, the housing having four apertures, each on a respective face of the housing;
wherein four shafts are respectively disposed in each of the four apertures, and each shaft is fixed to the housing.

13. The cardan joint (100) of any of claims 1 - 12, wherein:
the linkage (111) rotates relative to the first yoke (105) around a first axis,
the linkage (111) rotates relative to the second yoke (126) around a second axis; and
the first axis and second axis do not intersect.

14. The cardan joint (100) of claim 13, wherein the linkage (111) comprises:
a cuboidal shaped housing, the housing have two bores extending therethrough;
wherein two shafts are respectively disposed within the bores of the linkage (111), and each shaft (108, 120) is fixed to either the first yoke (105) or second yoke (126).

15. A multi-axis positioner including a cardan joint (100) as set out in any of claims 1 - 14.

## Patentansprüche

1. Kardangelenk (100), das Folgendes umfasst:
eine erste Gabel (105); und
eine zweite Gabel (126);
wobei die erste Gabel (105) und die zweite Gabel (126) über ein Verbindungsglied (111) verbunden sind;
wobei das Kardangelenk (100) außerdem Folgendes umfasst:
einen Spieleinstellungsmechanismus, wobei der
Spieleinstellungsmechanismus ausgelegt ist, um ein Spiel zwischen dem Verbindungsglied (111) und entweder der ersten Gabel (105) oder der zweiten Gabel (126) zu verringern oder zu erhöhen; und
eine Welle (108, 120), die entweder:
an einer der Gabeln (105, 126) befestigt ist und mit dem Verbindungsglied (111) in Schraubeingriff steht; oder
an dem Verbindungsglied (111) befestigt ist und mit einer der Gabeln (105, 126) in Schraubeingriff steht;
um dadurch eine Axialverschiebung zwischen diesen zu verhindern,
**dadurch gekennzeichnet, dass** der oder jeder Spieleinstellungsmechanismus als ein oder mehrere Schlitze (118, 121) innerhalb des Verbindungsglieds (111) bereitgestellt ist, wobei eine Breite des oder jedes Schlitzes (118, 121) einstellbar ist.

2. Kardangelenk (100) nach Anspruch 1, wobei die erste Gabel (105) oder die zweite Gabel (126) ausgelegt ist, um sich um eine Drehachse des Verbindungsglieds (111) zu drehen und wobei der Spieleinstellungsmechanismus ausgelegt ist, um das Ausmaß des Spiels in einer Achse quer zu der Drehachse zu verringern oder zu erhöhen.

3. Kardangelenk (100) nach Anspruch 1 oder Anspruch 2,
wobei der Spieleinstellungsmechanismus ausgelegt ist, um ein Ausmaß des Spiels zwischen dem Verbindungsglied (111) und der ersten Gabel (105) zu verringern oder zu erhöhen, und
das Gelenk (100) außerdem folgendes umfasst:
einen zweiten Spieleinstellungsmechanismus, wobei der zweite Spieleinstellungsmechanismus ausgelegt ist, um einen Grad des Spiels zwischen dem Verbindungsglied (111) und der zweiten Gabel (126) zu verringern oder zu erhöhen.

4. Kardangelenk (100) nach Anspruch 1, wobei die Welle (108, 120) eine erste Welle (108) ist, die an der ersten Gabel (105) oder der zweiten Gabel (126) befestigt ist und in Bezug auf das Verbindungsglied (111) drehbar ist;
wobei die erste Welle (108) gegebenenfalls innerhalb eines Gehäuses des Verbindungsglieds (111) angeordnet ist und wobei das Einstellen der Breite des Schlitzes (118) eine Abmessung des Gehäuses einstellt.

5. Kardangelenk (100) nach Anspruch 4, wobei die erste Welle (108) an der ersten Gabel (105) oder der zweiten Gabel (126) durch Muttern oder durch Kleben oder Schweißen befestigt ist.

6. Kardangelenk (100) nach einem der vorangegangenen Ansprüche, wobei ein weiterer Spieleinstellungsmechanismus als ein oder mehrere Schlitze innerhalb der ersten Gabel (105) und/oder der zweiten Gabel (126) bereitgestellt ist, wobei eine Breite des oder jedes Schlitzes einstellbar ist.

7. Kardangelenk (100) nach Anspruch 6, wobei die Welle eine zweite Welle ist, die an dem Verbindungsglied (111) befestigt ist und in Bezug auf die erste Gabel (105) oder die zweite Gabel (126) drehbar ist;
wobei die zweite Welle gegebenenfalls innerhalb eines Gehäuses der ersten Gabel (105) oder der zweiten Gabel (126) angeordnet ist und wobei das Einstellen der Breite des oder jedes Schlitzes eine Abmessung des Gehäuses einstellt;
und wobei die zweite Welle gegebenenfalls durch Kleben oder Schweißen an dem Verbindungsglied (111) befestigt ist.

8. Kardangelenk (100) nach einem der vorangegangenen Ansprüche, wobei das Gelenk (100) eine erste Welle (108) und eine zweite Welle (120) umfasst,
wobei die erste Welle (108):
an der ersten Gabel (105) befestigt ist und mit dem Verbindungsglied (111) in Schraubeingriff steht; oder
an dem Verbindungsglied (111) befestigt ist und mit der ersten Gabel (105) in Schraubeingriff steht;
um dadurch eine Axialverschiebung zwischen diesen zu verhindern; und
die zweite Welle (120):
an der zweiten Gabel (126) befestigt ist und mit dem Verbindungsglied (111) in Schraubeingriff steht; oder
an dem Verbindungsglied (111) befestigt ist und mit der zweiten Gabel (126) in Schraubeingriff steht;
um dadurch eine Axialverschiebung zwischen diesen zu verhindern.

9. Kardangelenk (100) nach einem der vorangegangenen Ansprüche, wobei die Welle bzw. die Wellen (108, 120) und/oder die Gehäuse aus einem Material mit einem niedrigen Reibungskoeffizienten gebildet sind.

10. Kardangelenk (100) nach einem der vorangegangenen Ansprüche, wobei der oder jeder Spieleinstellungsmechanismus einen oder mehrere Einstellungsschrauben (119, 122) umfasst, die innerhalb einer Gewindebohrung angeordnet sind.

11. Kardangelenk (100) nach einem der vorangegangenen Ansprüche, wobei
die erste Gabel (105) sich in Bezug auf das Verbindungsglied (111) um eine erste Achse dreht,
die zweite Gabel (126) sich in Bezug auf das Verbindungsglied (111) um eine zweite Achse dreht; und
die erste Achse und zweite Achse sich kreuzen.

12. Kardangelenk (100) nach Anspruch 11, wobei das Verbindungsglied (111) Folgendes umfasst:
ein quaderförmiges Gehäuse, wobei das Gehäuse vier Öffnungen aufweist, die jeweils auf einer entsprechenden Seite des Gehäuses liegen;
wobei vier Wellen jeweils in jeder der vier Öffnungen angeordnet sind und jede Welle an dem Gehäuse befestigt ist.

13. Kardangelenk (100) nach einem der Ansprüche 1 bis 12, wobei:
das Verbindungsglied (111) sich in Bezug auf die erste Gabel (105) um eine erste Achse dreht,
das Verbindungsglied (111) sich in Bezug auf die zweite Gabel (126) um eine zweite Achse dreht; und
die erste und zweite Achse sich nicht kreuzen.

14. Kardangelenk (100) nach Anspruch 13, wobei das Verbindungsglied (111) Folgendes umfasst:
ein quaderförmiges Gehäuse, wobei das Gehäuse zwei Bohrungen aufweist, die sich durch das Gehäuse erstrecken;
wobei zwei Wellen jeweils innerhalb der Bohrungen des Verbindungsglieds (111) angeordnet sind und jede Welle (108, 120) an entweder der ersten Gabel (105) oder der zweiten Gabel (126) befestigt ist.

15. Mehrachsen-Positionierungsvorrichtung, die ein Kardangelenk (100), wie in einem der Ansprüche 1 bis 14 dargelegt, umfasst.

## Revendications

1. Joint de cardan (100), comprenant :
une première fourche (105) ; et
une seconde fourche (126) ;
dans lequel la première fourche (105) et la seconde fourche (126) sont reliées via une liaison (111) ;
le joint de cardan (100) comprenant en outre :
un mécanisme d'ajustement de jeu, le mécanisme d'ajustement de jeu configuré pour réduire ou augmenter une quantité de jeu entre la liaison (111) et la première fourche (105) ou la seconde fourche (126) ; et
un arbre (108, 120), soit :
fixé à l'une des fourches (105, 126) et mis en prise de manière vissée avec la liaison (111) ; ou
fixé à la liaison (111) et mis en prise de manière vissée avec l'une des fourches (105, 126) ;
de manière à empêcher un déplacement axial entre eux
**caractérisé en ce que** le ou chaque mécanisme d'ajustement de jeu est prévu sous la forme d'une ou de plusieurs fentes (118, 121) à l'intérieur de la liaison (111), dans lequel une largeur de la ou de chaque fente (118, 121) est ajustable.

2. Joint de cardan (100) selon la revendication 1, dans lequel la première fourche (105) ou la seconde fourche (126) est configurée pour tourner autour d'un axe de rotation de la liaison (111), et dans lequel le mécanisme d'ajustement de jeu est configuré pour réduire ou augmenter la quantité de jeu dans un axe transversal à l'axe de rotation.

3. Joint de cardan (100) selon la revendication 1 ou la revendication 2,
dans lequel le mécanisme d'ajustement de jeu est configuré pour réduire ou augmenter une quantité de jeu entre la liaison (111) et la première fourche (105), et
le joint (100) comprend en outre :
un second mécanisme d'ajustement de jeu, le second mécanisme d'ajustement de jeu configuré pour réduire ou augmenter un degré de jeu entre la liaison (111) et la seconde fourche (126).

4. Joint de cardan (100) selon la revendication 1, dans lequel l'arbre (108, 120) est un premier arbre (108), qui est fixé à la première fourche (105) ou à la seconde fourche (126) et peut tourner par rapport à la liaison (111) ;
facultativement dans lequel le premier arbre (108) est disposé à l'intérieur d'un logement de la liaison (111), et dans lequel un ajustement de la largeur de la fente (118) ajuste une dimension du logement.

5. Joint de cardan (100) selon la revendication 4, dans lequel le premier arbre (108) est fixé à la première fourche (105) ou à la seconde fourche (126) par des écrous ou par collage ou soudage.

6. Joint de cardan (100) selon l'une quelconque des revendications précédentes, dans lequel un mécanisme d'ajustement de jeu supplémentaire est prévu sous la forme d'une ou de plusieurs fentes à l'intérieur de la première fourche (105) et/ou de la seconde fourche (126), dans lequel une largeur de la ou de chaque fente est ajustable.

7. Joint de cardan (100) selon la revendication 6, dans lequel l'arbre est un second arbre étant fixé à la liaison (111) et pouvant tourner par rapport à la première fourche (105) ou à la seconde fourche (126) ;
facultativement dans lequel le second arbre est disposé à l'intérieur d'un logement de la première fourche (105) ou de la seconde fourche (126), et dans lequel un ajustement de la largeur de la ou de chaque fente ajuste une dimension du logement ;
et facultativement dans lequel le second arbre est fixé à la liaison (111) par collage ou soudage.

8. Joint de cardan (100) selon l'une quelconque des revendications précédentes, dans lequel le joint (100) comprend un premier arbre (108) et un second arbre (120),
le premier arbre (108) étant :
fixé à la première fourche (105) et mis en prise de manière vissée avec la liaison (111) ;
fixé à la liaison (111) et mis en prise de manière vissée avec la première fourche (105) ;
de manière à empêcher un déplacement axial entre eux ; et
le second arbre (120) étant :
fixé à la seconde fourche (126) et mis en prise de manière vissée avec la liaison (111) ; ou
fixé à la liaison (111) et mis en prise de manière vissée avec la seconde fourche (126) ;
de manière à empêcher un déplacement axial entre eux.

9. Joint de cardan (100) selon l'une quelconque des revendications précédentes, dans lequel le ou les arbre(s) (108, 120) et/ou logement(s) sont formés d'un matériau ayant un faible coefficient de frottement.

10. Joint de cardan (100) selon l'une quelconque des revendications précédentes, dans lequel le ou chaque mécanisme d'ajustement de jeu comprend une ou plusieurs vis d'ajustement (119, 122) disposées à l'intérieur d'un alésage fileté.

11. Joint de cardan (100) selon l'une quelconque des revendications précédentes, dans lequel
la première fourche (105) tourne par rapport à la liaison (111) autour d'un premier axe,
la seconde fourche (126) tourne par rapport à la liaison (111) autour d'un second axe ; et
le premier axe et le second axe se recoupent.

12. Joint de cardan (100) selon la revendication 11, dans lequel la liaison (111) comprend :
un logement de forme cubique, le logement ayant quatre ouvertures, chacune sur une face respective du logement ;
dans lequel quatre arbres sont respectivement disposés dans chacune des quatre ouvertures, et chaque arbre est fixé au logement.

13. Joint de cardan (100) selon l'une quelconque des revendications 1 à 12, dans lequel :
la liaison (111) tourne par rapport à la première fourche (105) autour d'un premier axe,
la liaison (111) tourne par rapport à la seconde fourche (126) autour d'un second axe ; et
le premier axe et le second axe ne se recoupent pas.

14. Joint de cardan (100) selon la revendication 13, dans lequel la liaison (111) comprend :
un logement de forme cubique, le logement ayant deux alésages s'étendant à travers celui-ci ;
dans lequel deux arbres sont disposés respectivement à l'intérieur des alésages de la liaison (111), et chaque arbre (108, 120) est fixé à la première fourche (105) ou à la seconde fourche (126).

15. Dispositif de positionnement à axes multiples comprenant un joint de cardan (100) selon l'une quelconque des revendications 1 à 14.
